# EUROPÄISCHE PATENTANMELDUNG

(11) **EP 0 651 536 A2**
(43) Veröffentlichungstag der Anmeldung: **03.05.1995**
(21) Anmeldenummer: 94116638.1
(22) Anmeldetag: 21.10.1994
(51) Int. Cl.: H04L 12/56, H04Q 11/04

(54) **Verfahren zur Wiederherstellung einer vorgegebenen Reihenfolge für ATM-Zellen**

(30) Priorität: 29.10.1993 DE 4337095
(71) Anmelder: SIEMENS AKTIENGESELLSCHAFT, D-80333 München (DE)
(72) Erfinder: Reisch, Michael, Dr., D-87439 Kempten (DE); Ziemann, Klaus, Dipl.-Phys., D-82110 Germering (DE)

(57) **Zusammenfassung**

Der Anmeldungsgegenstand betrifft ein Verfahren, bei dem ein im allgemeinen ungeordneter Zellenstrom (ICS) einem in der Regel zentral verwalteten Zellen-Speicher (CM) zugeführt und in diesem zwischengespeichert wird und bei dem aus den Zellen des zugeführten Zellenstromes Pfadkennungs/Folgenummern-Signale (VPI/SN) abgeleitet und einer Resequenzier-Steuerung (RC) zugeführt werden, in der Adressen (ADR) zur Adressierung des Zellen-Speichers (CM) derart gebildet werden, daß ein geordneter Zellenstrom (OOCS) am Ausgang des Zellen-Speichers entsteht.Der Anmeldungsgegenstand wird in der ATM-Vermittlungstechnik für Koppelnetze verwendet, bei denen Zellen einer Verbindung mit unterschiedlichen Laufzeiten durch das Koppelnetz laufen.

## Beschreibung

Ein solches Verfahren wird beispielsweise in der ATM-Vermittlungstechnik (asynchronous transfer mode) für Koppelnetze benötigt, bei denen Zellen einer Verbindung über unterschiedlichen Pfaden, mit in der Regel unterschiedlichen Laufzeiten, durch das Koppelnetz laufen. Unter einer Verbindung kann dabei sowohl ein virtueller Pfad als auch ein virtueller Kanal verstanden werden. Wegen der im allgemeinen unterschiedlichen Laufzeiten durch das Koppelnetz, wird ein Zellenstrom einer jeweiligen Verbindung, dessen Zellen am Eingang des Koppelnetzes mit streng aufsteigender Folgenummer ankommen, diese Ordnung im allgemeinen Fall am Ausgang des Koppelnetzes verloren haben. Da ein Verlust der zeitlichen Ordnung der Information nicht zulässig ist, müssen die Zellen für jede Verbindung so sortiert werden, daß der Zellenstrom der jeweiligen Verbindung wiederum eine aufsteigende Folgenummer aufweist.

Die der Erfindung zugrundeliegende Aufgabe besteht nun darin, ein Verfahren anzugeben, das es erlaubt, Informationspakete (Zellen), die zu unterschiedlichen Verbindungen gehören und im allgemeinen keine der Größe nach geordnete Folgenummern aufweisen, so zu einem Strom von Zellen zu sortieren, daß für jede Verbindung die Folgenummern der Größe nach geordnet sind, wobei durch das Sortieren der Folgenummern die erforderliche zeitliche Reihenfolge der Zellen wieder hergestellt wird. Die Aufgabe wird erfindungsgemäß durch die Merkmale des Patentanspruchs 1 gelöst.

Die Ansprüche 2 bis 4 betreffen vorteilhafte Weiterbildungen des Verfahrens.

Die Erfindung wird im folgenden anhand der Zeichnung näher erläutert. Dabei zeigt:
- Figur 1: ein grobes Blockschaltbild zur Erläuterung des erfindungsgemäßen Verfahrens,
- Figur 2: ein detailliertes Blockschaltbild zur Erläuterung des erfindungsgemäßen Verfahrens,
- Figur 3: ein Ablaufdiagramm des erfindungsgemäßen Verfahrens,
- Figur 4: ein detailliertes Blockschaltbild zur Erläuterung einer Weiterbildung des erfindungsgemäßen Verfahrens und
- Figur 5: ein Ablaufdiagramm der Weiterbildung des erfindungsgemäßen Verfahrens.

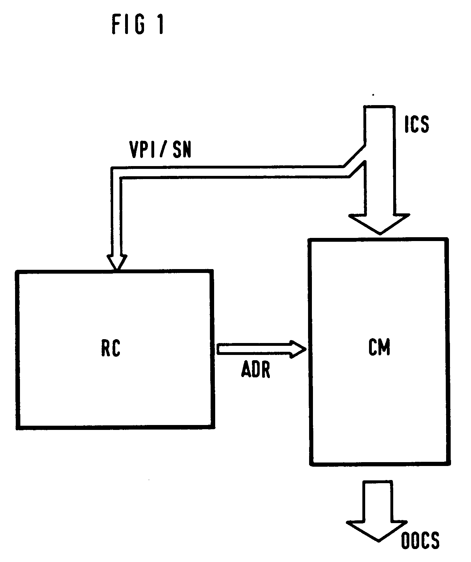

In Figur 1 ist ein grobes Blockdiagramm, bestehend aus einem in der Regel zentral verwalteten Zellen-Speicher CM und einer Resenquenzier-Steuerung RC dargestellt, wobei in den Zellen-Speicher CM ein im allgemeinen ungeordneter Zellenstrom ICS eingelesen und ein geordneter Zellenstrom OOCS aus diesem wieder ausgelesen wird. Aus Zellen des ankommenden Zellen-Stromes ICS wird jeweils eine Pfadkennung VPI (virtual path indentifier) für eine jeweilige Verbindung und eine Folgenummer SN (sequence number) für eine bestimmten Datenzelle der jeweiligen Verbindung abgeleitet. In der Resequenzier-Steuerung RC werden Adressen ADR derart gebildet, daß aus dem im allgemeinen ungeordneten Zellenstrom ICS ein geordneter Zellenstrom OOCS gebildet wird. In dem Zellen-Speicher CM werden dabei die aus dem Koppelfeld auslaufenden Zellen zwischengespeichert. Die Resequenzierung des Zellenstromes geschieht dabei über die Steuerung der Ein- und Auslesevorgänge aus dem zentralen Speicher.

Für das Folgende sei angenommen, daß eventuell auftretende redundante Zellen, die beispielsweise aus einem redundant aufgebauten Koppelfeld resultieren, bereits aus dem Zellenstrom ICS entfernt wurden.

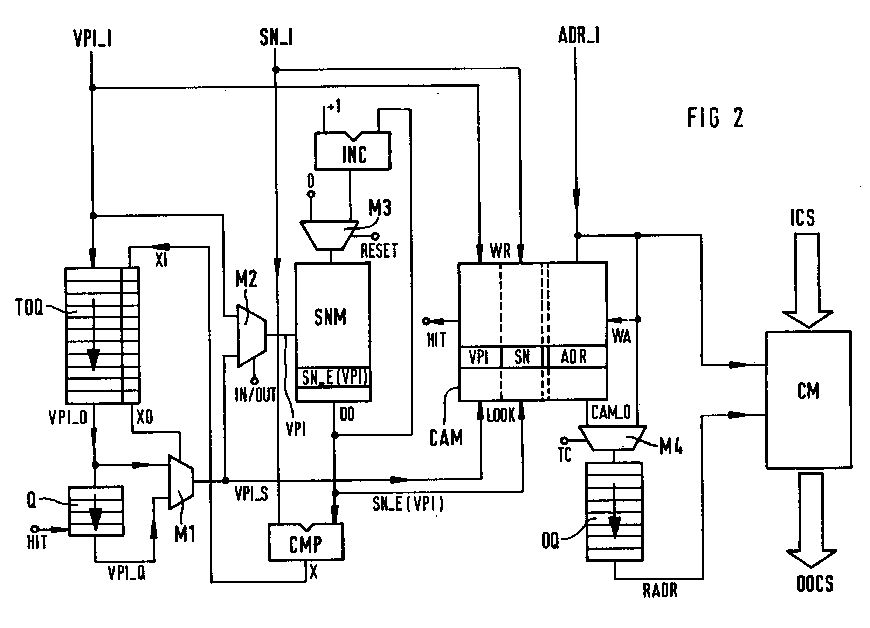

Zur Erläuterung des erfindungsgemäßen Verfahrens ist in Figur 2 eine zur Durchführung des Verfahrens erforderliche Anordnung bestehend aus dem Zellen-Speicher CM und einer detailliert dargestellten Resequenzier-Steuerung gezeigt. Die Resequenzier-Steuerung enthält dabei im wesentlichen eine Zeitüberschreitungs-Warteschlange TOQ mit einer fest vorgegebenen Anzahl von Einträgen, eine Ausgangs-Warteschlage OQ, eine weitere Warteschlange Q, einen Folgenummern-Speicher SNM, einen Assoziativspeicher CAM (content adressable memory), eine Vergleichsschaltung CMP, eine Inkrementiereinrichtung INC und Multiplexer M1 ... M4.

Die Zeitüberschreitungs-Warteschlag TOQ kann, aufgrund seiner konstanten Anzahl von Elementen, beispielsweise durch ein Schieberegister realisiert werden, wobei letzteres beispielsweise aus 400 Speicherelementen aufgebaut ist. Bei den Warteschlangen OQ und Q handelt es sich um Warteschlangen mit nicht fest vorgegebener Elementzahl, die beispielsweise dynamisch durch über Zeiger verkettete Speicherelemente realisierbar sind. Der Folgenummern-Speicher SNM ist beispielsweise durch eine 12 Bit-Adresse adressierbar und umfaßt somit maximal 4096 Einträge von Folgenummern, die beispielsweise jeweils 9 Bit breit sind. Aufgrund der begrenzten Bitbreite der Folgenummern, zum Beispiel 9 Bit, sind 512 verschiedene Folgenummern möglich. Der Assoziativspeicher CAM muß, aus später noch näher erläuterten Gründen, mehr Elemente aufweisen als die Zeitüberwachungs-Warteschlange TOQ und besteht hier in diesem Beispiel aus 512 Elementen.

Eine Pfadkennung VPI_I einer jeweiligen Zelle kann dabei über den Multiplexer M2 als aktuelle Pfadkennung VPI auf den Adreßeingang des Folgenummern-Speichers SNM durchgeschaltet werden. Aus den Folgenummern-Speichern SNM ist eine zur jeweiligen Pfadkennung gehörige erwartete Folgenummer SN_E(VPI) auf einen Datenausgang DO des Folgenummern-Speichers SNM auslesbar und mit Hilfe der Vergleicherschaltung CMP mit der Folgenummer SN_I der jeweiligen Zeile vergleichbar. Das Vergleichsergebnis X wird am Beginn der Zeitüberschreitungs-Warteschleife TOQ zusammen mit der Pfadkennung VPI_I als Markierungsbit XI eingetragen. Die für eine Pfadkennung erwartete Folgenummer SN_E (VPI) am Datenausgang DO ist über die Inkrementiererschaltung INC im Speicher SNM jeweils um eins erhöhbar und, sofern ein Rücksetzsignal RESET am Multiplexer M frei anliegt, auf Null rücksetzbar. Da der Folgenummern-Speicher SNM hier nur 512 verschiedene Folgenummern ermöglicht, erfolgt eine Inkrementierung Modulo 512. Abhängig vom Markierungsbit XO am Ausgang der Zeitüberschreitungs-Warteschlange TOQ ist entweder die Pfadkennung VPI_O am Ausgang der Warteschlane TOQ oder die Pfadkennung VPI_Q am Ausgang der Warteschlange Q als Pfadkennung VPI_S auswählbar, wobei dem Eingang der weiteren Warteschlange Q die Pfadkennung VPI_O zuführbar ist. Abhängig von einem Steuersignal IN/OUT ist über den Multiplexer M2 alternativ zur Pfadkennung VPI_I auch die Pfadkennung VPI_S zur Adressierung des Folgenummern-Speichers SNM zugeführt. Dem Assoziativspeicher CAM werden eine Eingangsadresse ADR_I die Pfadkennung VPI_I und die Folgenummer SN_I als einzuschreibende Daten WR zugeführt, wobei die jeweils durch eine Schreibadresse WA adressierte Datenzelle des Assoziativspeichers beschrieben wird. Die Eingangsadresse ADR_I wird dabei zum Beispiel in einem Ringzähler erzeugt und die gleichzeitig als Schreib-Adresse für den Zellen-Speicher CM verwandt. Im Assoziativspeicher CAM kann eine Adresse ADR für die Pfadkennung VPI_S und die zugehörige erwartete Folgenummer SN_E, die gemeinsam als Suchkriterium im Assoziativspeicher CM anliegen, gesucht (LOOK) werden. Ist die Suche erfolgreich so wird im Assoziativspeicher CAM ein Treffersignal HIT erzeugt und die entsprechende Adresse ADR am Datenausgang CAM_O des Assoziativspeichers CAM ausgegeben. Das Treffersignal HIT dient gleichzeitig als Übernahmesignal HIT für die Warteschlange Q. Durch den Multiplexer M4 ist die Eingangsadresse ADR_I in die Ausgangs-Warteschleife OQ direkt einschreibbar, sofern eine Testzelle TC vorliegt, und die Adresse am Ausgang CAM_O in die Warteschlange OQ eintragbar, sofern keine Testzelle TC vorliegt. Am Ausgang der Warteschlange OQ liegt eine Lese-Adresse RADR für den Zellen-Speicher CM an.

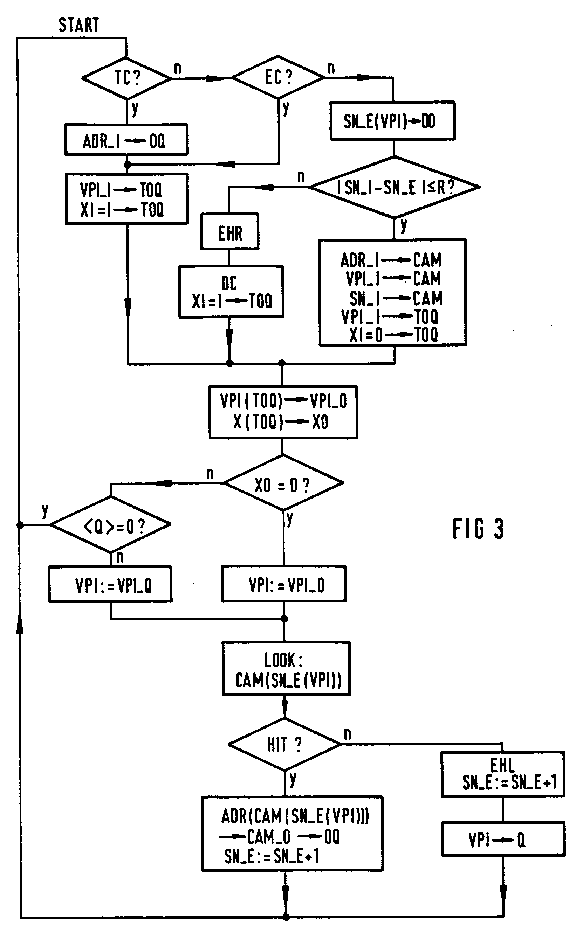

Figur 3 zeigt ein Flußdiagramm des erfindungsgemäßen Verfahrens, bei dem zu Beginn START eines Zellen-Zyklusses überprüft wird, ob eine Testzelle TC oder eine leere Zelle EC vorliegt oder nicht. Für den Fall, daß eine Testzelle TC vorliegt, wird die Eingangsadresse ADR_I direkt in die Ausgangs-Warteschlange OQ übernommen und die Pfadkennung VPI_I der jeweiligen Zelle in die Zeitüberschreitungs-Warteschlange TOQ zusammen mit einem gesetzten Markierungsbit XI = I eingetragen. Für den Fall, daß eine Leerzelle EC, die keine Testzelle ist, vorliegt wird nur die Pfadkennung VP_I der jeweiligen Zelle in die Zeitüberschreitungs-Warteschlange TOQ zusammen mit dem gesetzten Markierungsbit XI = I eingetragen. Eine Zelle weist dabei entsprechende Markierungen zur Erkennung einer Testzelle oder einer leeren Zelle auf.

Nach der Sonderbehandlung von Testzellen und leeren Zellen beginnt das eigentliche Verfahren damit, daß für eine Verbindung mit der Pfadkennung VPI_I der jeweiligen Zelle eine erwartete Folgenummer von SN_E(VPI) aus dem Folgenummern-Speicher SNM ausgelesen und daraufhin überprüft wird, ob der Betrag der Differenz zwischen der erwarteten Folgenummer SN_E(VPI) und der Folgenummer SN_E der jeweiligen Zelle einen vorgegebenen Bereichswert R überschreitet oder nicht. Liegt eine Bereichsüberschreitung von R vor, erfolgt eine entsprechende Fehlerbehandlung EHR, eine Beseitigung DC der Zelle und ein Eintrag des gesetzten Markierungsbits XI = I in die Zeitüberschreitungs-Warteschlange TOQ. Sofern hingegen keine Bereichsüberschreitung von R auftritt, wird die Eingangsadresse ADR_I im Assoziativspeicher CAM, die Pfadkennung VPI_I der jeweiligen Zelle sowohl in den Assoziativspeicher CAM als auch in die Zeitüberschreitungs-Warteschlange TOQ, die Folgenummer SN_I der jeweiligen Zelle in den Assoziativspeicher CAM und ein nicht gesetztes Markierungsbit XI = 0 in die Zeitüberschreitungs-Warteschlange eingetragen. Daraufhin wird aus der Zeitüberschreitungs-Warteschlange eine Pfadkennung VPI_O und ein zugehöriges Markierungsbit XO ausgelesen und anschließend festgestellt, ob das Markierungsbit gesetzt ist oder nicht. Falls das Markierungsbit XO am Ausgang der Zeitüberschreitungs-Warteschlange TOQ nicht gesetzt ist (XO = 0), wird eine zur Adressierung des Folgenummern-Speichers SNM benutzte aktuelle Pfadkennung VPI gleich der Pfadkennung VPI_O aus der Zeitüberwachungs-Warteschlange gesetzt. Sofern das Markierungsbit gesetzt ist (XO = 1) und die weitere Warteschlange Q leer ist, wird ein neuer Zellen-Zyklus begonnen. Für den Fall, daß das Markierungsbit gesetzt ist und die weitere Warteschlange Q jedoch nicht leer ist, wird die aktuelle Pfadkennung VPI gleich einer am Ausgang der zusätzlichen Warteschlange Q anstehenden Pfadkennung VPI_Q gesetzt. Sobald die aktuelle Pfadkennung VPI festgelegt ist, wird im Assoziativspeicher CAM ein Eintrag gesucht (LOOK), der die aktuelle Pfadkennung VPI und die zugehörige erwartete Folgenummer SN_E(VPI) aus dem Folgenummern-Speicher aufweist, wobei das Treffersignal HIT erzeugt wird, falls ein solcher Eintrag vorhanden ist. Für den Fall, daß kein Treffersignal HIT vorliegt, wird eine Fehlerbehandlung EHL wegen eines Zellenverlustes durchgeführt und die jeweilige erwartete Folgenummer SN_E(VPI) im Folgenummern-Speicher SNM um eins erhöht und die aktuelle Pfadkennung VPI in die weitere Warteschlange Q eingetragen. Sofern jedoch ein Treffersignal HIT vorliegt, wird die jeweilige Adresse ADR(CAM(SN_E(VPI))) aus dem gesuchten Eintrag im Assoziativspeicher CAM in die Ausgangs-Warteschlange OQ ausgelesen und die jeweilige erwartete Folgenummer um eins erhöht. Zum Schluß wird aus der Ausgangs-Warteschlange OQ eine Lese-Adresse RADR ausgelesen und zur Adressierung einer auszulesenden Zelle des Zellen-Speichers CM verwendet. Falls eine weitere Zelle im Zellenstrom ICS vorliegt wird ein neuer Zellenzyklus gestartet.

Um die Gefahr zu vermeiden, daß Zellen einer Verbindung unzulässig lange verzögert werden, ist eine maximale Wartezeit von beispielsweise 400 Zelltakten festzulegen, wobei die maximale Wartezeit von den Eigenschaften des jeweiligen Koppelnetzes abhängt. Trifft hierbei eine Zelle im festgelegten Zeitintervall nicht ein, so wird sie als verloren behandelt (EHL). Mit Hilfe des Folgenummern-Speichers SNM und der Vergleicherschaltung CMP wird erkannt, ob die jeweiligen Zellen im richtigen Folgenummern-Bereich liegen. Die Angabe eines solchen Bereiches ist nötig, da die Folgenummer-Vergabe wegen der endlichen Anzahl der für die Folgenummern zur Verfügung stehenden Bits zyklisch, zum Beispiel bei 9 Bit Modulo 512, erfolgt. Für jede Verbindung erfolgt beispielsweise eine Sortierung nach aufsteigenden Folgenummern. Die Zeituberschreitungs-Warteschlange TOQ dient der Steuerung des Auslesens von Zellen und zeigt an, daß eine Zelle der aus der Zeitüberschreitungs-Warteschlange TOQ ausgelesenen Verbindung mit der Pfadkennung VPI_I den maximalen Laufzeitunterschied, also beispielsweise 400 Zelltakte, im Zellspeicher gewartet hat. Die Laufzeit durch die Zeitüberschreitungs-Warteschlange TOQ ist also gleich der maximal zulässigen Verzögerung durch das Koppelnetz zu wählen. Zellen einer Verbindung, die eine Folgenummer SN aufweisen, die um mehr als die maximale Verzögerung nach der Zelle derselben Verbindung mit der Folgenummer SN + 1 eintreffen, werden nicht mehr berücksichtigt. Zu jeder aus der Zeitschreitungs-Warteschlange TOQ ausgelesenen Verbindung mit der Pfadkennung VPI_O muß sich auch unter worstcase-Bedingungen die Zelle mit der als nächstes auszulesenden Folgenummer, also mit der erwarteten Folgenummer, SN_E im Speicher befinden, sofern kein Verlust einer Zelle aufgetreten ist. Für den Fall daß ein Zellenverlust vorliegt, wird die entsprechende Fehlerbehandlung EHL durchgeführt. Die Fehlerbehandlungen EHR bzw. EHL bestehen im einfachsten Fall lediglich aus einer entsprechenden Fehlermeldung. Wird die Eingangsadresse ADR_I mit Hilfe eines Ringzählers festgelegt, so kann auf einfache Art und Weise sichergestellt werden, daß alte Einträge im Zellenspeicher CM und gegebenenfalls Einträge im Assoziativspeicher CAM regelmäßig überschrieben werden. Das Markierungsbit XI wird genau dann gleich Null gesetzt, wenn die entsprechende Zelle im Zellenspeicher CM ausgelesen werden soll, das heißt wenn eine gültige Datenzelle eingetragen wurde. Im Folgenummern-Speicher SNM ist zu jeder Verbindungskennung VPI nur die aktuelle, das heißt die als nächstes auszulesende Folgenummer SN_E(VPI) abgelegt.

Für neu installierte Verbindungen müssen am Eingangs des Koppelnetzes für jede Verbindung mit einer Null beginnende Folgenummern vergeben werden, da durch das Rücksetzsignal RESET die Folgenummern im Folgenummern-Speicher SNM ebenfalls mit einer Null beginnen. Wird darauf verzichtet, daß die Folgenummern mit Null beginnen, so muß eine zusätzliche up-date-Phase für den Folgenummern-Speicher SNM vorgesehen werden, die zwar prinzipiell realisierbar ist, aber mit einem vergleichsweise hohem Steuerungsaufwand verbunden ist. Bei einer Wiederaufnahme des Betriebs nach einem Ausfall oder ähnlichem ist wie bei einem Neuaufbau der betreffenden Verbindungen zu verfahren.

Die Ausgangs-Warteschlange OQ ist nötig, da in einem Zellzyklus bis zu zwei auszulesende Zellen auftreten können, nämlich eine Testzelle und eine regulär ausgelesene Datenzelle. Die weitere Warteschlange Q ist erforderlich, da bei einem Zellenausfall zur betreffenden Verbindung eine Zelle mehr im Assoziativspeicher CAM bzw. im Zellenspeicher CM eingetragen ist als Einträge der betreffenden Verbindung in der Zeitüberwachungs-Warteschlange TOQ vorliegen. Die weitere Warteschlange Q wird nur in den Zellzyklen für eine Suche im Assoziativspeicher herangezogen, in denen ein Zugriff auf den Assoziativspeicher frei ist. Dies ist der Fall, wenn entweder eine Testzelle eingelesen wird, deren Eingangsadresse ADR_I direkt in die Ausgangs-Warteschlange OQ geschrieben wird, oder wenn eine Pfadkennung VPI_O mit einem gesetzten Markierungsbit XO = I aus der Zeitüberschreitungs-Warteschlange TOQ ausgelesen wird.

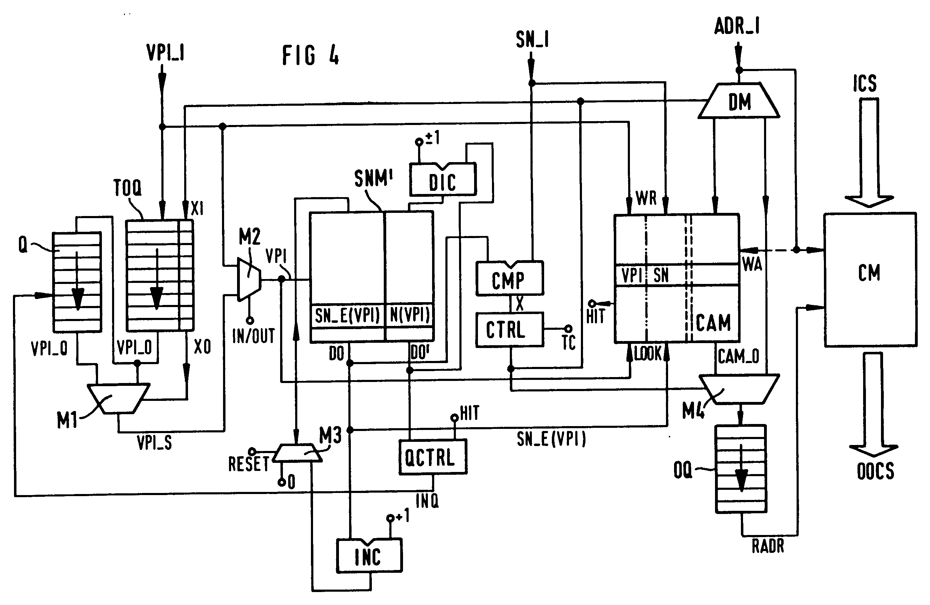

In Figur 4 ist ein vereinfachtes Blockschaltbild zur Erläuterung einer Weiterbildung des erfindungsgemäßen Verfahrens dargestellt und entspricht bis auf die im folgenden näher beschriebenen Abänderungen dem in Figur 2 dargestellten Blockschaltbild.

Zum einen besteht ein wesentlicher Unterschied darin, daß der Folgenummernspeicher SNM durch einen Folgenummernspeicher SNM' ersetzt ist, in dem jeweils zu einer für eine aktuelle Pfadkennung VPI erwarteten Folgenummer SN_E(VPI) die Anzahl N(VPI) der zur jeweiligen Pfadkennung VPI vorliegenden Einträge im Zellen-Speicher CN abgespeichert ist. Mit Hilfe einer Dekrementier/Inkrementiereinheit DIC läßt sich eine jeweils am Datenausgang DO' anliegende jeweilige Anzahl N(VPI) jeweils im Folgenummernspeicher SNM' je nach Bedarf entweder jeweils um eins erniedrigen oder um eins erhöhen. Ferner ist eine Steuereinheit QCTRL zur Steuerung der weiteren Warteschlange Q vorgesehen, die abhängig von Signalen am Datenausgang DO' des Folgenummernspeichers SNM' und abhängig vom Treffersignal HIT ein Übernabmesignal INQ für die weitere Warteschlange Q bildet. Ferner ist die Eingangsadresse ADR_I über einen Demultiplexer DM entweder in den Assoziativspeicher CAM oder, wie in Figur 2 dargestellt, über den Multiplexer M4 in die Ausgangs-Warteschlange OQ eintragbar. Der Demultiplexer DM, der Multiplexer M4 und der Eingang für das Markierungsbit XI werden durch das Ausgangssignal einer sogenannten Bypass-Steuerung CTRL angesteuert. Die Bypass-Steuerung erhält als Eingangssignal das Ausgangssignal der Vergleicherschaltung CMP und ein Signal, das das Auftreten einer Testzelle TC signalisiert.

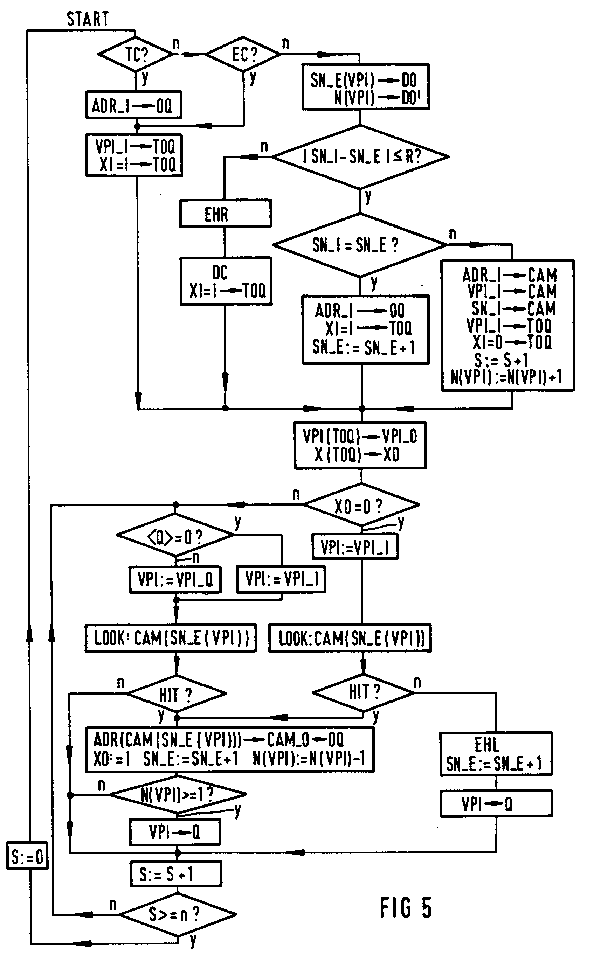

Anhand des in Figur 5 dargestellten Flußdiagramms wird die Weiterbildung des erfindungsgemäßen Verfahrens näher erläutert. Das in Figur 5 dargestellte Flußdiagramm unterscheidet sich dabei von dem in Figur 3 dargestellten Flußdiagramm in einigen, im nachfolgenden erläuterten Verfahrensschritten. So wird zusätzlich zu der für jeweilige Pfadkennung erwarteten Folgenummer SN_E(VPI) die Zahl N(VPI) der zur jeweiligen Pfadkennung VPI vorliegenden Einträge im Zellenspeicher CM mit abgespeichert. Nach einer Überprüfung, ob eine Überschreitung des Bereiches R vorliegt oder nicht, werden die Fälle, ob die Folgenummer SN_I der jeweiligen Zelle der erwarteten Folgenummer SN_E entspricht oder nicht unterschieden. Falls sich die beiden Folgenummern SN_I und SN_E werden zusätzlich zu den Einträgen in den Assoziativspeicher CAM und den Einträgen in die Zeitüberschreibungs-Wartungsschlange TOQ eine Zählvariable S für die Anzahl der Zugriffe auf den Assoziativspeicher CAM und die Zahl N(VPI) jeweils um Eins erhöht. Falls die beiden Folgenummern identisch sind, das heißt falls die Folgenummer der jeweiligen Zelle der erwarteten Folgenummern SN_E entspricht, wird die Eingangsadresse ADR_I direkt in die Ausgangs-Warteschlange OQ eingetragen. Darüber hinaus wird das Markierungsbit XI am Eingang der Zeitüberschreitungs-Warteschlange gesetzt und zusammen mit der jeweiligen Pfadkennung VPI in diesen übernommen und darüber hinaus die erwartete Folgenummer SN_E um Eins erhöht. Nachdem im folgenden aus der Zeitüberschreitungs-Warteschlange, wie in Figur 3 bereits dargestellt, die Pfadkennung VPI_O und das zugehörige Markierungsbit XO ausgelesen wurde und festgestellt wurde, ob das Markierungsbit gesetzt ist oder nicht, erfolgt, für den Fall, daß das Markierungsbit XO gesetzt ist, eine Abfrage, ob die zusätzliche Warteschlange Q leer ist oder nicht. Im anderen Fall bei dem das Markierungsbit XO nicht gesetzt ist, wird die aktuelle Pfadkennung VPI gleich der Pfadkennung VPI_O aus der Zeitüberschreitungs-Warteschlange TOQ gesetzt. Ist die zusätzliche Warteschlange Q nicht leer, so erhält die aktuelle Pfadkennung VPI, wie in Figur 3, die am Ausgang der zusätzlichen Warteschlange Q anstehende Pfadkennung VPI_Q. Im Unterschied zur Figur 3 wird jedoch im Falle einer leeren zusätzlichen Warteschlange Q die aktuelle Pfadkennung VPI gleich der Pfadkennung VPI_I der jeweiligen Zelle gesetzt. Daraufhin wird im Assoziativspeicher CAM ein Eintrag gesucht (LOOK), der die aktuelle Pfadkennung VPI und die zugehörige erwartete Folgenummer SN_E(VPI) aus dem Folgenummern-Speicher SNM aufweist, und ein Treffersignal HIT erzeugt, falls ein solcher Eintrag vorhanden ist. Für den Fall, daß das Markierungsbit XO nicht gesetzt ist und kein Treffersignal HIT erzeugt wurde, erfolgt, wie in Figur 3, eine Fehlerbehandlung EHL wegen eines Zellenverlustes, wird die jeweilige erwartete Folgenummer SN_E(VPI) im Folgenummern-Speicher SNM um Eins erhöht und die aktuelle Pfadkennung VPI in die weitere Warteschlange Q eingetragen. Sofern ein Treffersignal HIT vorliegt, wird wie in Figur 3, die Adresse ADR (CAM( (SN_E(VPI))) aus dem gesuchten Eintrag im Assoziativspeicher CAM in die Ausgangs-Warteschlange OQ ausgelesen und die jeweilige erwartete Folgenummer SN_E(VPI) im Folgenummern-Speicher SNM um Eins erhöht, darüber hinaus wird zusätzlich das Markierungsbit XO am Ausgang der Zeitüberschreitungs-Warteschlange TOQ gesetzt, die Zahl N(VPI) der zur jeweiligen Pfadkennung VPI vorliegenden Einträge im Zellen-Speicher CM um Eins erniedrigt und anschließend, wenn die Zahl N(VPI) der zur jeweiligen Pfadkennung VPI vorliegenden Einträge größer gleich Eins ist, die aktuelle Pfadkennung VPI in die weitere Warteschlange Q eingetragen. Für den Fall, daß kein Treffersignal HIT vorliegt und das Markierungsbit XO gesetzt war, erfolgen zwischen der Abfrage des Treffersignals HIT und der Eintragung der aktuellen Pfadkennung VPI in die weitere Warteschlange Q keine Schritte. Ist die Zahl N kleiner Eins, wird die aktuelle Pfadkennung VPI nicht in die weitere Warteschlange Q eingetragen. Zum Schluß wird die Zählvariablen S für die Anzahl der Zugriffe auf den Assoziativspeicher CAM um eins erhöht und anschließend die Schritte zwischen der Abfrage, ob die weitere Warteschlange Q leer ist oder nicht, und einer Anfrage der Zählvariablen S solange wiederholt, bis die Zählvariable S eine Anzahl n der pro Zellen-Takt maximal möglichen Zugriffe auf den Assoziativspeicher überschreitet. Wird die Anzahl n überschritten, so wird die Zählvariable S gleich Null gesetzt, wie in Figur 3 gezeigt, aus der Ausgangs-Warteschlange OQ eine Lese-Adresse RADR ausgelesen und zur Adressierung einer auszulesenden Zelle des Zellen-Speichers CM verwendet und daraufhin, falls erforderlich, ein neuer Zellenzyklus gestartet (START).

Die Pfadkennung VPI und die zugehörige Folgenummer SN_E(VPI) einer einlaufenden Datenzelle wird hier nur dann in den Assoziativspeicher CAM eingetragen, wenn die einlaufende Folgenummer ungleich der für die betreffende Pfadkennung erwarteten ist. Die Folgenummer muß hierbei jedoch innerhalb eines Akzeptanzbereiches liegen, ansonsten wird die Zelle als ungültig erkannt. Einlaufende Zellen, deren jeweilige Folgenummer gleich der erwarteten ist, werden nicht im Assoziativspeicher CAM eingetragen. Die Adresse, unter der die Zelle im Zellen-Speicher CM abgespeichert ist, wird dann direkt in die Ausgangs-Warteschlange OQ geschrieben. Die Zeitüberschreitungs-Warteschlange TOQ wird nach wie vor mit jeder einlaufenden Zelle beschrieben. Einträge, die Zellen entsprechen, deren Eingangsadresse ADR_I bereits in die Ausgangswarteschlange OQ geschrieben wurde, werden jedoch durch das Markierungsbit X gekennzeichnet. Dabei bedeutet X = 0 beispielsweise, daß die Zelle, die zum Eintrag in die Zeitüberschreitungs-Warteschlange TOQ führte, im CAM eingetragen ist und bedeutet ein gesetztes Markierungsbit X = 1, daß die Eingangsadresse ADR_I der entsprechenden Zelle bereits in die Ausgangs-Warteschlange eingetragen wurde.

Für Verbindungen mit niedriger Datenrate, deren Zellen mit hoher Wahrscheinlichkeit in der richtigen Reihenfolge ankommen, wird die Resequenzier-Steuerung im allgemeinen umgangen, das heißt die durch diesen bedingte Verzögerung bleibt klein. Für Verbindungen mit hoher Datenrate ist die Überholwahrscheinlichkeit groß und gleichzeitig der mittlere Zellenabstand klein im Vergleich zur Laufzeit durch die Zeitüberschreitungs-Warteschlange TOQ. Für derartige Verbindungen resultiert eine in vielen Fällen unzulässig hohe Blockierwahrscheinlichkeit des erfindungsgemäßen Verfahrens ohne die erfindungsgemäße Weiterbildung.

Zur Erläuterung einer gegebenenfalls auftretenden Blockierung sei die Folgenummer-Sequenz 5, 4, 6, 7, 8 , 9, in der nur die Zelle mit der Folgenummer 5 die Reihenfolge durchbricht (out of sequence). Die zuerst ankommende Zelle mit der Folgenummer 5 wird demzufolge in den Assoziativspeicher geschrieben. Die Zelle mit der Folgenummer 4 wird als in der richtigen Reihenfolge vorliegend erkannt und die entsprechende Eingangsadresse ADR_I über den sogenannten Bypass in die Ausgangswarteschlange OQ geschrieben. Die nun folgenden Zellen werden bei einer hochratigen Verbindung im allgemeinen Einlaufen, bevor die in die Zeitüberschreitungs-Warteschlange TOQ eingetragene Pfadkennung wieder ausgelesen und so über den oben beschriebenen Assoziativspeicherzugriff die Leseadresse RADR der Zelle mit der Folgenummer 5 in die Ausgangs-Warteschlange OQ geschrieben wird. Da aber erst zu diesem Zeitpunkt die Folgenummer der betreffenden Verbindung erhöht werden kann, werden die nachfolgenden Zellen den Folgenummern 6, 7, 8, 9 sämtlich als nicht in der richtigen Reihenfolge auftretend markiert und nicht direkt weitergeschleust, obwohl die Folgenummern in der richtigen Reihenfolge eintreffen. Dieses Beispiel läßt erkennen, daß dieser einfache Bypass alleine für hochratige Verbindungen unwirksam ist. Dies gilt unabhängig davon, wie die Zeitüberschreitung überwacht wird; so werden Zellen, die zum Einsortieren zwischengespeichert werden, aus einem Zwischenspeicher erst nach Erreichen eines Verfallsdatums wieder ausgelesen werden können.

In der Weiterbildung des erfindungsgemäßen Verfahrens ist nun zusätzlich zu den durch die Zeitüberwachungs-Warteschlange TOQ initiierten Zugriffen auf den Assoziativspeicher CAM ein Suchverfahren vorgesehen, das es erlaubt die im Assoziativspeicher befindlichen Zellen mit Folgenummern, die gleich der für die jeweilige Pfadkennung erwarteten sind, auszulesen, obwohl die zugehörige Pfadkennung noch nicht vollzählig durch die Zeitüberwachungs-Warteschlange TOQ gelaufen ist. Dies läßt sich mit vertretbarem Aufwand durchführen, da der Assoziativspeicher ohne solche Maßnahmen noch nicht völlig ausgelastet ist. Insbesondere in Zellenzyklen, in denen der Bypass-Fall eintritt, würde gar kein CAM-Zugriff stattfinden, wenn zusätzlich keine als gültig gekennzeichnete Pfadkennung aus der Zeitüberschreitungs-Warteschlange TOQ ausgelesen wird, obwohl beispielsweise aufgrund der schaltungstechnischen Möglichkeiten mehrere, zum Beispiel zwei, Assoziativspeicherzugriffe möglich sind. Das Ziel des im folgenden beschriebenen Suchverfahrens ist es, den Assoziativspeicher möglichst effektiv in derartigen Zellzyklen zu nutzen, um die Zahl der Zellen, die aufgrund des Zeitüberschreitungs-Kriteriums auszulesen sind, zu minimieren. Die Anzahl der möglichen Assoziativspeicherzugriffe (Suchen bzw. Eintragen) in einem Zellenzyklus wird dabei mit n bezeichnet. Ungenutzte Assozitivspeicherzugriffe können nun dazu verwendet werden, um Pfadkennungen aus der weiteren Warteschlange Q zu suchen. Auf diesem Wege kann der oben angeführte Ausfallmechanismus beim weitergebildeten erfindungsgemäßen umgangen werden. Ist die Suche erfolgreich, so wird die Eingangsadresse ADRI_I in die Ausgangs-Warteschlange OQ geschrieben und die betreffende Zelle ausgelesen. Ist die zusätzliche Warteschlange Q leer, was zum Beispiel direkt nach dem Einschalten der Fall ist, so wird für ungenutzte Assoziativspeicherzugriffe die Pfadkennung der einlaufenden Zelle benutzt.

Zur Durchführung des erfindungsgemäßen Verfahrens kann die in Figur 1 mit RC bezeichnete Resequenzier-Steuerung, die im Prinzip mindestens die Elemente von Figur 2 bzw. Figur 4 enthält, in Form einer sogenannten kundenspezifischen integrierten Schaltung (ASIC) ausgeführt werden, wobei der Folgenummernspeicher SNM beispielsweise, wie der Zellenspeicher CM, als externer Speicher ausgeführt ist.

## Patentansprüche

1. Verfahren zur Wiederherstellung einer vorgegebenen Reihenfolge für ungeordnete Zellströme in der ATM-Vermittungstechnik,
bei dem, in einem 1. Schritt, ein im allgemeinen ungeordneter Zellenstrom (ICS) einem Zellen-Speicher (CM) zugeführt und jeweils eine Zelle dieses Zellenstroms in einen durch eine Eingangsadresse (ADR_I) adressierten Speicherbereich des Zellenspeichers (CM) zwischengespeichert wird,
bei dem, in einem 2.Schritt, eine für eine Verbindung mit einer Pfadkennung (VPI_I) der jeweiligen Zelle erwartete Folgenummer (SN_E(VPI)) aus einem Folgenummern-Speicher (SNM) ausgelesen und daraufhin überprüft wird, ob der Betrag der Differenz zwischen der erwarteten Folgenummer (SN_E(VPI)) und der Folgenummer (SN_I) der jeweiligen Zelle einen vorgegebenen Bereichswert(R) überschreitet oder nicht,
bei dem, in einem 3. Schritt, eine Fehlerbehandlung (EHR) der Bereichsüberschreitung, eine Beseitigung (DC) der Zelle und ein Eintrag eines gesetzten Markierungsbits (XI=I) in eine Zeitüberschreitungs-Warteschlange (TOQ) erfolgen, sofern der Bereichswert (R) überschritten wird,
bei dem, in einem 4. Schritt, die Eingangsadresse (ADR_I) in einen Assoziativspeicher (CAM), die Pfadkennung (VPI_I) der jeweiligen Zelle sowohl in den Assoziativspeicher als auch in die Zeitüberschreitungs-Warteschlange (TOQ), die Folgenummer (SN_I) der jeweiligen Zelle in den Assoziativspeicher und ein nicht gesetztes Markierungsbit (XI=0) in die Zeitüberschreitungs-Warteschlange eingetragen werden, sofern der Bereichswert (R) nicht überschritten wird,
bei dem, in einem 5. Schritt, aus der Zeitüberschreitungs-Warteschlange eine Pfadkennung (VPI_O) und ein zugehöriges Markierungsbit (XO) ausgelesen werden und festgestellt wird, ob das Markierungsbit gesetzt ist oder nicht,
bei dem, in einem 6. Schritt, eine zur Adressierung des Folgenummern-Speichers benutzte aktuelle Pfadkennung (VPI) gleich der Pfadkennung (VPI_O) aus der Zeitüberschreitungs-Warteschlange gesetzt wird, sofern das Markierungsbit(XO=0) nicht gesetzt ist, und sonst, falls eine weitere Warteschlange (Q) leer ist, ein neuer Zellzyklus begonnen wird oder ,falls die weitere Warteschlange nicht leer ist, die aktuelle Pfadkennung (VPI) gleich einer am Ausgang der zusätzlichen Warteschlange (Q) anstehenden Pfadkennung (VPI_Q) gesetzt wird,
bei dem, in einem 7. Schritt, im Assoziativspeicher (CAM) ein Eintrag gesucht (LOOK) wird, der die aktuelle Pfadkennung (VPI) und die zugehörige erwartete Folgenummer (SN_E(VPI)) aus dem Folgenummern-Speicher aufweist und ein Treffersignal (HIT) erzeugt wird, falls ein solcher Eintrag vorhanden ist,
bei dem, in einem 8. Schritt, eine Fehlerbehandlung (EHL) wegen eines Zellenverlustes durchgeführt, die jeweilige erwartete Folgenummer (SN_E(VPI)) im Folgenummern-Speicher (SNM) um Eins erhöht und die aktuelle Pfadkennung (VPI) in die weitere Warteschlange (Q) eingetragen wird, falls kein Treffersignal vorliegt,
bei dem, in einem 9. Schritt, sofern ein Treffersignal (HIT) vorliegt, die Adresse (ADR(CAM(SN_E(VPI)))) aus dem gesuchten Eintrag im Assoziativspeicher (CAM) in eine Ausgangs-Warteschlange (OQ) ausgelesen und die jeweilige erwartete Folgenummer (SN_E(VPI)) im Folgenummern-Speicher (SNM) um Eins erhöht wird und
bei dem, in einem 10. Schritt, aus der Ausgangs-Warteschlange (OQ) eine Lese-Adresse (RADR) ausgelesen und zur Adressierung einer auszulesenden Zelle des Zellen-Speichers (CM) verwendet und anschließend, falls erforderlich, ein neuer Zellenzyklus gestartet (START) wird.

2. Verfahren nach Anspruch 1,
bei dem im Folgenummern-Speicher (SNM) zu einer für eine jeweilige Pfadkennung (VPI) erwarteten Folgenummer (SN_E(VPI)) zusätzlich eine Zahl (N(VPI)) der zur jeweiligen Pfadkennung (VPI) vorliegenden Einträge im Zellen-Speicher (CM) abgespeichert wird,
bei dem im 2. Schritt zusätzlich die Zahl (N(VPI)) der zur jeweiligen Pfadkennung (VPI) vorliegenden Einträge im Zellen-Speicher (CM) aus dem Folgenummern-Speicher ausgelesen wird,
bei dem vor dem 4. Schritt überprüft wird, ob die Folgenummer (SN_I) der jeweiligen Zelle mit der Folgenummer der erwarteten Folgenummer (SN_E) übereinstimmt und der 4. Schritt dadurch ergänzt wird, daß eine Zählvariable (S) für die Anzahl der Zugriffe auf den Assoziativspeicher (CAM) und die Zahl(N(VPI)) der zur jeweiligen Pfadkennung vorliegenden Einträge im Folgenummern-Speicher um Eins erhöht werden, sofern dies nicht zutrifft, und der 4. Schritt dadurch ersetzt wird, daß die jeweilige Eingangsadresse (ADR_I) direkt in die Ausgangs-Warteschleife (OQ) eingetragen, ein gesetztes Markierungsbit (XI=I) in die Zeitüberschreitungs-Warteschlange (TOQ) eingeschrieben und die jeweilige erwartete Folgenummer (SN_E) im Folgenummern-Speicher (SNM) um Eins erhöht wird, sofern dies zutrifft,
bei dem, der 6. Schritt ersatzweise darin besteht, daß die aktuelle Pfadkennung (VPI) gleich der Pfadkennung (VPI_O) aus der Zeitüberschreitungs-Warteschlange gesetzt wird, sofern das Markierungsbit(XO=0) nicht gesetzt ist,und sonst,falls die weitere Warteschlange (Q) leer ist, die aktuelle Pfadkennung (VPI) gleich der Pfadkennung (VPI_I) der jeweiligen Zelle oder ,falls die weitere Warteschlange nicht leer ist, die aktuelle Pfadkennung (VPI) gleich der am Ausgang der zusätzlichen Warteschlange (Q) anstehenden Pfadkennung (VPI_Q) gesetzt wird,
bei dem der 8. Schritt nur dann erfolgt, wenn das Markierungsbit (XO=0) nicht gesetzt ist,
bei dem, im 9. Schritt, zusätzlich das Markierungsbit (XO=I) am Ausgang der Zeitüberschreitungs-Warteschlange (TOQ) gesetzt, die Zahl (N(VPI)) der zur jeweiligen Pfadkennung (VPI) vorliegenden Einträge im Zellen-Speicher (CM) um Eins erniedrigt und anschließend, wenn die Zahl (N(VPI))der zur jeweiligen Pfadkennung (VPI) vorliegenden Einträge größer gleich Eins ist, die aktuelle Pfadkennung (VPI) in die weitere Warteschlange (Q) eingetragen wird,
bei dem, vor dem 10. Schritt, die Zählvariable (S) für die Anzahl der Zugriffe auf den Assoziativspeicher (CAM) um Eins erhöht und anschließend die Schritte 6. bis 9. solange wiederholt werden bis die Zählvariable (S) eine Anzahl (n) der pro Zellen-Takt maximal möglichen Zugriffe auf den Assoziativspeicher überschreitet und
bei dem der 10. Schritt dadurch ergänzt wird, daß die Zählvariable (S) gleich Null gesetzt wird.

3. Verfahren nach einem der Ansprüche 1 oder 2,
bei dem die Eingangsadresse (ADR_I) in die Ausgangs-Warteschlange (OQ) übernommen wird und eine Pfadkennung (VPI_I) der jeweiligen Zelle in eine Zeitüberschreitungs-Warteschlange (TOQ) zusammen mit einem gesetzten Markierungsbit (XI=I) eingetragen wird, sofern die jeweilige Zelle aus einer Testzelle (TC)besteht, und
bei dem eine Pfadkennung (VPI_I) der jeweiligen Zelle in eine Zeitüberschreitungs-Warteschlange (TOQ) zusammen mit einem geletzten Markierungsbit (XI=I) eingetragen wird, sofern die jeweilige Zelle aus einer Leerzelle (EC) besteht, die keine Testzelle (TC) ist.

4. Verfahren nach einem der Ansprüche 1 bis 3,
bei dem die Eingangsadresse (ADR_I) sowohl als Schreib-Adresse für den Zellen-Speicher (CM) als auch als Schreib-Adresse (WA) für den Assoziativspeicher (CAM) verwendet wird.
